# EUROPÄISCHE PATENTANMELDUNG

(11) **EP 3 006 007 A1**
(43) Veröffentlichungstag der Anmeldung: **13.04.2016**
(21) Anmeldenummer: 15003226.6
(22) Anmeldetag: 24.03.2014
(51) Int. Cl.: A61J 1/14, B65D 51/00

(54) **INJEKTIONSSTOPFEN SOWIE BEUTEL FÜR MEDIZINISCHE ZWECKE**

(30) Priorität: 24.03.2013 DE 102013005272
(62) Teilanmeldung aus: 14728411.1
(71) Anmelder: Kiefel GmbH, 83395 Freilassing (DE)
(72) Erfinder: Muth, Friedrich, 32339 Espelkamp (DE); Hinterseer, Heinz, 83395 Freilassing (DE)
(74) Vertreter: Farago, Peter Andreas

(57) **Zusammenfassung**

Die Erfindung betrifft einen Injektionsstopfen für einen Beutel für medizinische Zwecke sowie einen Beutel für medizinische Zwecke mit einem solchen Injektionsstopfen.

Bei dem System nach dem Stand der Technik wird in einen Beutel ein Schlauchstück eingeschweißt, auf welches der Port aufgesteckt wird. Der Port wird nicht zusätzlich fixiert, sondern hält rein durch die Spannung im Schlauch. Dadurch kann es theoretisch zu Dichtigkeitsproblemen kommen.

Bei dem hier vorgeschlagenen, neuen System wird demgegenüber der Port direkt in den Beutel eingeschweißt. Somit entfällt der Schlauch als Zwischenstück. Daraus resultiert insbesondere der Vorteil, dass bei jedem Beutel über 30 mm Schlauch eingespart werden, was nicht nur die Anlagenkonstruktion günstiger macht, sondern auch die Schläuche mit deren relativ hohen Kosten entfallen lässt.

Außerdem können der Schlauch und der Port wahlweise mit demselben Schweißwerkzeug eingeschweißt werden. Der Betreiber der Anlage kann entscheiden, ob er einen Schlauch und einen Port oder zwei Schläuche einschweißt. Hierfür ist kein Werkzeugwechsel notwendig.

Sofern der Betreiber der Anlage zwei Schläuche einschweißt, können auf die Schläuche immer noch die Standardports nach dem Stand der Technik aufgesetzt werden.

## Beschreibung

Die Erfindung betrifft einen Injektionsstopfen für einen Beutel für medizinische Zwecke und den Beutel selbst.

Beutel für medizinische Zwecke sind im Stand der Technik umfangreich bekannt. Neben der Aufnahme von Infusionslösungen können solche Beutel vor allem zum Aufbewahren von Blut und zum Aufbewahren von sterilen medizinischen Flüssigkeiten benutzt werden.

Die Beutel sind mit einem Befüll- und Entnahmesystem ausgestattet, welche in der Regel als Ports bezeichnet werden, oder in der deutschen Bezeichnung als "Entnahmestopfen" auf der Entnahmeseite sowie als "Injektionsstopfen" auf der Injektionsseite, wenn mehrere Befüll- und Entnahmemöglichkeiten vorgesehen sind.

Im Regelfall wird zum Inneren des Beutels ein Zugang dadurch erzeugt, dass ein Kunststoffschlauch mit verschiedensten Formen, Durchmessern, Wanddicken oder Werkstoffhärten zwischen die beiden Folienlagen eingeschweißt wird, welche den Beutel letzten Endes bilden. Sobald der Beutel hergestellt ist und der Zugang eingeschweißt ist, kann der Beutel befüllt werden, was oft schon in der Produktionsanlage erfolgen soll, wobei ausdrücklich darauf hingewiesen wird, dass die hier vorliegende Erfindung auch nicht befüllte Beutel betrifft. Der Zugang oder die Zugänge werden anschließend mit einem Stopfen verschlossen. Der Stopfen klemmt fest dichtend in dem Zugangsschlauch.

Oft ist es gewünscht, dass medizinisches Fachpersonal in die Flüssigkeit im Beutel einen Wirkstoff injizieren kann. Dazu weist ein solcher Beutel einen Injektionsstopfen auf. Dies ist mit einfachen Worten ein Stopfen mit einer Gummidichtung, welche sich zentral im Körper des Stopfens befindet und mit der Injektionsnadel einer herkömmlichen Spritze durchstochen werden kann. Die Nadel durchfährt das weiche, elastomere Material der Dichtung und endet bei idealer Abstimmung zwischen Länge der Nadel und Länge von Zugang und Injektionsstopfen zwar nah am Beutelinneren, um eine gute Verteilung des zu injizierenden Wirkstoffs zu erreichen, aber verlässt nicht den Zugang, somit das härtere Kunststoffröhrchen, insbesondere gelangt die Nadel nicht in das Innere des Beutels hinein, wodurch sie den Beutel nicht mechanisch verletzen kann. Zieht das Fachpersonal die Injektionsnadel wieder aus dem Injektionsstopfen heraus, verschließt die Gummidichtung unter dem Druck, in welchem sie eingesetzt ist, die Durchstichstelle, und der Beutel ist wieder dicht.

Das Einschweißen eines Kunststoffröhrchens zwischen zwei Folienlagen am Beispiel des Hochfrequenzschweißens, wobei die hier vorliegende Erfindung nicht auf das Hochfrequenzschweißen eingeschränkt ist sondern sich zumindest auch mit dem thermischen Schweißen von Kunststofffolien beschäftigt, ist beispielhaft der WO 2007/140760 A2 zu entnehmen.

Eine vorteilhafte Verfahrensweise zum Befüllen von hergestellten Beuteln ist der WO 2012/006980 A2 zu entnehmen.

Die DE 10 2014 051 556 B4 offenbart eine Vorrichtung und ein Verfahren zum Herstellen von Kunststoffbeuteln mit einem oder mehreren Ports. Es wird dort vor allem eine spezielle Geometrie der Zugangsstücke vorgeschlagen. Die Druckschrift verweist außerdem auf die DE 196 34 944 C1, auf die DE 199 58 952 A1, die DE 692 16 991 T2 und die US 4,352,669.

Ist ein Zugang aus einem Schlauch hergestellt, wird als Werkstoff meist Polypropylen verwendet, wenn die Folie ebenfalls aus Polypropylen hergestellt ist. Der Erweichungspunkt von Polypropylen liegt bei ungefähr 140 °C. Das Sterilisieren der Beutel erfolgt bei 121 °C, so dass zahlreiche niedriger schmelzende oder erweichende Werkstoffe für die meisten Anwendungszecke ausscheiden.

Der vorliegenden Erfindung liegt die Aufgabe zugrunde, dem Stand der Technik eine Verbesserung oder Alternative zur Verfügung zu stellen.

Nach einem ersten Aspekt der vorliegenden Erfindung, wobei hier kein Schutz für die Anlage beansprucht ist, löst diese Aufgabe eine Anlage zum Herstellen eines Beutels für medizinische Zwecke aus zwei Folienlagen, einem Zugang und einem Injektionsstopfen, wobei der Zugang einen Schlauch aufweist, wobei sich die Anlage dadurch kennzeichnet, dass sie dazu eingerichtet ist, einen Injektionsstopfen mit daran einstückig ausgebildetem Zugang zwischen die Folienlagen zu schweißen.

Begrifflich sei hierzu folgendes erläutert:
Die Anlagenkategorie zum Herstellen solcher Beutel wird üblicherweise als "Thermoformanlagen" bezeichnet.

Die zwei "Folienlagen" sind bevorzugt zwei getrennte Folienlagen, es kann sich aber auch beispielsweise um einen Folienschlauch oder eine gefaltete Folienbahn handeln, so dass mindestens zwei Lagen resultieren.

Bereits an dieser Stelle sei darauf hingewiesen, dass im Rahmen der hier vorliegenden Patentanmeldung unbestimmte Artikel "ein...", "zwei..." als "mindestens"-Angaben zu verstehen sein sollen, also als "mindestens ein...", "mindestens zwei..." usw., sofern sich nicht aus dem jeweiligen Kontext etwa ergibt, dass dort nur "genau ein...", "genau zwei..." usw. gemeint sein soll.

Der Zugang wurde hier als ein "Schlauch" bezeichnet. In der Praxis ist stattdessen auch oft von einem "Rohr" oder "Röhrchen" die Rede. Im Rahmen der hier vorliegenden Patentanmeldung soll ein Rohr ein Unterfall eines Schlauchs sein, beide Male jedoch bevorzugt aus Kunststoff.

Der "Injektionsstopfen" sollte mit einem elastomeren Dichtmittel dazu eingerichtet sein, dass eine Injektionsnadel durch ihn hindurch gestochen wird und dadurch in den Zugang oder sogar durch den Zugang gelangt.

Der vorgestellte erste Aspekt der Erfindung sieht vor, dass am Injektionsstopfen einstückig ausgebildet der Zugang sein soll. Auf diese Weise wird ein einstückiges Zugang-Injektionsstopfen-Element erhalten, bei welchem nicht mehr ein separater Zugang mit dem Beutel verschweißt werden und anschließend der Injektionsstopfen eingesteckt werden muss. Vielmehr ist der zwischen die Folien einzuschweißende Zugang sogleich mit dem Injektionsstopfen versehen und somit dicht. Es entfällt ein Produktionsschritt.

Wenn der Beutel befüllt werden soll, wird vorgeschlagen, dass die Anlage dazu eingerichtet ist, neben dem hier vorgeschlagenen einstückigen Zugang-Injektionsstopfen-Element einen zweiten Zugang einzuschweißen, und zwar in herkömmlicher Weise mit einem offenen Schlauchstück. Durch das offene Schlauchstück kann die Befüllung erfolgen. Das Befüllen nimmt zwar die doppelte Zeit in Anspruch, weil nur einer von zwei Zugängen verwendet werden kann, weil der andere bereits verschlossen ist; der Wegfall der separaten Zugänge in Form von Schläuchen ist aber erheblich kostengünstiger, wobei außerdem die ansonsten vorhandene, risikobehaftete Dichtwirkung zwischen dem Zugangsschlauch und dem darin eingepressten Stopfen vermieden wird. Stattdessen wird ein in sich bereits separat dicht hergestelltes System nun mit dem Beutel dicht verschweißt.

In der Anlage ist im Regelfall ein Zugangsschweißwerkzeug vorgesehen. Wenn dies der Fall ist, wird vorgeschlagen, dass das Zugangsschweißwerkzeug eine Zuführung für zu Zugängen separate Injektionsstopfen aufweist, bevorzugt für zu Zugängen separate Zugang-Injektionsstopfen-Systeme.

Eine solche Anlage ist im einfachsten Fall nach dem Stand der Technik bekannte Zugänge und Injektionsstopfen zu verarbeiten eingerichtet. Denn wenn die separaten Injektionsstopfen zugeführt werden können, dann müssen nicht zwangsweise nur einstückig ausgebildete Zugang-Injektionsstopfen-Systeme verarbeitet werden.

Bevorzugt kumulativ, aber nicht zwingend, ist vorgesehen, dass das Zugangsschweißwerkzeug eine Zuführung für von Injektionsstopfen separate Zugänge aufweist.

Bei einer solchen Einrichtung können herkömmliche Zugänge verarbeitet werden, also beispielsweise einfache Schlauchstückchen, welche zwischen die Folien eingeschweißt werden. Wenn zusätzlich die Zuführung für separate Injektionsstopfen vorhanden ist, können die Zugänge sofort oder später verschlossen werden.

Alternativ oder kumulativ ist vorgesehen, dass das Zugangsschweißwerkzeug eine Zuführung für einstückige kombinierte Zugang-Injektionsstopfen-Elemente aufweist.

Eine dergestalt eingerichtete Anlage kann jedenfalls die hier vorgeschlagenen einstückig kombinierten Zugang-Injektionsstopfen-Elemente verarbeiten und diese zwischen die Folien schweißen.

Wenn alle drei vorstehend genannten Zuführungen vorgesehen sind, kann die Anlage wahlweise zwischen den verschiedenen Systemen wechseln. Somit wird dann vorgeschlagen, dass mehrere der Zuführungen zum wahlweisen Einsatz vorgesehen sind.

Eine Anlage, welche die einstückigen kombinierten Zugang-Injektionsstopfen-Elemente verarbeiten kann, insbesondere zwischen die Folienlagen zu schweißen, ist bevorzugt frei von einer Injektionsstopfenaufsteckstation, was die Anlage günstiger konstruierbar macht.

Nach einem zweiten Aspekt der hier vorliegenden Erfindung, wobei hier kein Schutz für ein Verfahren beansprucht ist, löst die gestellte Aufgabe ein Verfahren zum Herstellen eines Beutels für medizinische Zwecke aus zwei Folienlagen, einem Zugang und einem Injektionsstopfen in einer Anlage, wobei in der Anlage ein Injektionsstopfen mit einem daran einstückig ausgebildeten Zugang in Form eines Schlauchs verwendet wird und der Zugang zwischen zwei Folienlagen geschweißt wird, wobei das Verschweißen an dem Zugang vorgenommen wird.

Begrifflich wurde bereits erläutert, dass der Beutel für medizinische Zwecke insbesondere ein Infusionsbeutel sein kann.

Das Herstellverfahren, welches hier vorgeschlagen wird, entspricht im Wesentlichen derselben Idee wie die vorstehend beschriebene Anlage: Es soll ein einstückig ausgebildetes Element verarbeitet werden, welches sowohl den Zugang, meist in Form eines Schlauchs, als auch den Injektionsstopfen beide an einem vorgefertigten Element aufweist. Dass die beiden "einstückig" ausgebildet sein sollen, heißt nicht zwingend, dass sie aus demselben Werkstoff bestehen müssen. Vielmehr wird sogar in den meisten Fällen eine Kombination von verschiedenen Werkstoffen sinnvoll sein, so beispielsweise eine röhrenförmige Konstruktion aus härterem oder weicherem Kunststoff, und eine darin eingesetzte Gummidichtung oder generell eine Elastomerdichtung, bevorzugt mit Polyisoprenen, wobei allerdings auch nur einmal durchstoßbare Stopfen in einer spezielleren Betrachtung darunter fallen sollen, so beispielsweise Twist-Off-Stopfen, bei welchen keine Elastomerdichtung vorgesehen ist, so dass meist zwei von vier Flügeln abgedreht werden, und dann wird ein Spike-Port eingestoßen, der dann drin bleiben muss. Wird der Spike-Port entfernt, ist der Stopfen undicht. Twist-Off-Stopfen sind hingegen meist aus nur einem Werkstoff gefertigt.

Der Begriff "einstückig" bezieht sich im Rahmen der hier vorliegenden Anmeldung somit primär darauf, dass es sich um ein vorgefertigt assembliertes Element handelt.

In bevorzugter Ausführung hat für die "einstückige" Verbindung der Struktur zwischen dem Zugang und dem Injektionsstopfen eine solche Vereinigung stattgefunden, dass die beiden Teile nicht zerstörungsfrei voneinander abgezogen werden können.

Nach einem dritten Aspekt der hier vorliegenden Erfindung löst die gestellte Aufgabe ein Injektionsstopfen für einen Beutel für medizinische Zwecke, wobei der Injektionsstopfen einen einstückig ausgeformten Zugang aufweist.

Der dritte Aspekt der Erfindung hat erkannt, dass sich die Grundidee der hier vorgestellten Erfindung nicht etwa nur auf die Herstellanlage und das Herstellverfahren erstreckt, sondern vielmehr auch auf das einstückig gebildete Zugang-Injektionsstopfen-Element als solches. Insbesondere wird ein Hersteller, der die Anlagen zum Herstellen von medizinischen Beuteln und zusätzlich die einstückigen Zugang-Stopfen-Elemente anbietet, in der Lage sein, die Durchmesser und die Werkstoffe von Werkzeug und Werkstück ideal aufeinander abzustimmen, auch im Falle von Änderungen. Darüber hinaus kann sehr leicht auch ein herkömmliches Zugangsröhrchen angeboten werden, welches idealerweise denselben Außendurchmesser aufweist wie der Zugang am kombinierten Element, so dass es für das Schweißwerkezug bei idealer Ausgestaltung keinen Unterschied macht, ob ein herkömmlicher Zugang oder ein kombiniertes Zugang-Stopfen-Element an dessen Zugang eingeschweißt wird.

Bevorzugt ist der Zugang des kombinierten Zugang-Injektionsstopfen-Elements hohlzylindrisch ausgebildet. Die seit vielen Jahren bewährte kreisrunde Form sowohl außen als auch innen am Zugang, bevorzugt ausgebildet als ein Schlauchstück oder Rohrstück, lässt sich auf vielen auch schon bestehenden Anlagen verarbeiten.

Der kombinierte Injektionsstopfen hat im Bereich des Zugangs bevorzugt ein Schlauchstück mit einem Außendurchmesser von 8,0 mm bis 9,1 mm, insbesondere von etwa 8,0 mm, etwa 8,7 mm oder etwa 8,8 mm.

Nach dem Stand der Technik sind sehr häufig Zugänge in Form von Schlauchstücken mit den vorstehend genannten Außendurchmessern zu finden. Wenn nun ein kombiniertes Zugang-Stopfen-Element im Bereich seines Zugangs einen entsprechenden Außendurchmesser aufweist, dann kann es bei geeigneter Gestaltung auf bestehenden Anlagen in den dortigen Schweißwerkzeugen sogleich verarbeitet werden, wobei im Regelfall lediglich die Zuführung geändert werden muss.

Auch rautenförmige Anschluss- oder Verschweißbereiche wie aus dem Stand der Technik bekannt können unter die hier vorgestellte Erfindung fallen.

Hinsichtlich der Länge wird vorgeschlagen, dass das kombinierte Zugang-Injektionsstopfen-System insgesamt eine Länge entlang der Längsachse des Zugangs von mehr als 30 mm aufweist, insbesondere von mehr als 35 mm oder bevorzugt von mehr als 40 mm.

Injektionsnadeln zum Injizieren eines medizinischen Wirkstoffs in die Flüssigkeit im medizinischen Beutel haben in der Praxis meist eine Länge von maximal 40 mm. Wenn das kombinierte Gesamtsystem eine Länge von 40 mm aufweist, kann die Spitze der Nadel nicht in die Folie stechen, wenn sie durch das Dichtgummi oder durch die dazu vorgesehene Stelle am Injektionsstopfen geschoben wird.

Unabhängig von den vorstehend genannten Überlegungen ist ein Injektionsstopfen dann vorteilhaft, wenn er einen ausgeformten Zugang mit einer Innenseite aus einem ersten Werkstoff aufweist und außerdem eine Elastomerdichtung aus einem zweiten Werkstoff aufweist, wobei zugangsseitig der Elastomerdichtung eine Dichtmembran vorgesehen ist, welche zum Zugang gewandt den ersten Werkstoff aufweist.

Die Hersteller von Medizinprodukten sehen sich sehr aufwendigen Zulassungsprozeduren ausgesetzt. Die Zulassung muss für jeden Werkstoff erfolgen, der mit dem - meist sterilen - Innenbereich beziehungsweise der darin vorhandenen Flüssigkeit im gefüllten Medizinbeutel in Berührung kommt. Ist der Stopfen im Wesentlichen aus Polycarbonat gefertigt, oder aus einem anderen starren, harten Werkstoff, dann ist der Stopfen im Allgemeinen hohl gefertigt und weist an seinem vom Beutel abgewandten Ende ein Dichtmaterial auf, also ein Elastomer und in der Praxis oft ein Polyisopren. Die Flüssigkeit gelangt dann vom Inneren des Beutels in den hohlen Zugang hinein, also meist einen hohlzylindrischen Zugang, und berührt dessen Innenoberfläche, so dass für jeden dort vorhandenen Werkstoff eine Medizinproduktzulassung erwirkt werden muss, was beinhaltet, dass zahlreiche Tests auf die Reaktionen zwischen der Flüssigkeit und dem Werkstoff durchgeführt werden müssen. Die Flüssigkeit gelangt aber auch durch den Zugang hindurch in den Bereich des Stopfens und stößt dort innerhalb des hohlen Kunststoff-Körpers an die Elastomer-Dichtung. Somit muss auch für die Elastomer-Dichtung dieselbe Testreihe durchgeführt werden.

Ist hingegen auf dem Weg zwischen dem Eintritt (beutelinnenseitig) in den Zugang und dem elastomeren Dichtmaterial eine dichtende Trennwand gesetzt, welche zumindest zur Beutelinnenseite hin gerichtet aus demselben Werkstoff besteht wie die Innenoberfläche am Zugang oder jedenfalls die Innenoberfläche des Flüssigkeit leitenden Hohlkörpers, dann muss für das Elastomer keine Werkstoffprüfung für die Zulassung durchgeführt werden. Denn die Flüssigkeit wird während des nicht-eingesetzten Zustands am Beutel von der Flüssigkeit nicht berührt. Wird nun eine Injektionsnadel durch die Elastomerdichtung hindurchgeschoben, so tritt die Nadel nach dem Durchlaufen der Elastomerdichtung auch durch die Dichtmembran hindurch und gelangt dort in die Flüssigkeit, die sich im Inneren des medizinischen Beutels befindet.

Für den Fachmann ist es eine rein handwerkliche Maßnahme, die Dimensionierung der Dichtmembran in Abhängigkeit von den einzusetzen geplanten Injektionsnadeln und dem Werkstoff, aus welchem die Dichtmembran bestehen soll, so vorzunehmen, dass eine sichere Trennwirkung erfolgt, solange kein Anstich erfolgt ist, dass aber die Injektionsnadel mit vertretbarem Kraftaufwand durch die Dichtmembran hindurchtreten kann.

Gemäß einem fünften Aspekt der hier vorliegenden Erfindung löst die gestellte Aufgabe ein Injektionsstopfen für einen Beutel für medizinische Zwecke, wobei der Injektionsstopfen einen ausgeformten Zugang mit hohlzylindrischer Form aufweist, wobei der Zugang eine Wanddicke von mehr als 1,0 mm aufweist.

Im Stand der Technik ist der Zugang üblicherweise ein Kunststoffschlauch. Die bekannten Schläuche haben eine Wanddicke von weniger als 1,0 mm. Dadurch wird nur relativ wenig des teuren Werkstoffs für den Zugang erforderlich. Allerdings sind die Schläuche nicht eigenstabil, sondern hängen bei horizontaler Ausrichtung und nur einseitiger Einspannung schnell nach unten. Deshalb hat man auch bei Thermoformanlagen zum Einsetzen der Schlauchstücke im Stand der Technik Einsteckmandrenen verwendet, also zentral in die Röhrchen eingesteckte Metallstäbe. Diese haben die Röhrchen exakt in ihrer Position vorherberechenbar gemacht, so dass ein effizienter Einschweißprozess in einer Thermoformanlage erfolgen konnte.

Ist nun der Zugang an seiner vom Beutel abgewandten Seite bereits mit einem Stopfen versehen, so lässt sich von der vom Beutel abgewandten Seite kein Halter mehr einführen. Ein Greifen außen an die Röhrchen ist zwar möglich, aber aufwendiger. Noch aufwendiger ist es, die zum Beutelinneren hin naturgemäß offenen Röhrchen von der Innenseite der Beutel heraus mit einer Einsteckmandrene zu halten.

Wenn die Bauweise im Bereich des Zugangs allerdings so stabil ist, dass die Wanddicke mehr als 1,0 mm beträgt, bevorzugt mehr als 1,1 mm, 1,2 mm, 1,3 mm, 1,4 mm, 1,5 mm, 1,6 mm, 1,7 mm, 1,8 mm, 1,9 mm oder sogar 2,0 mm, dann hat der Schlauch eine so hohe Eigenstabilität in Folge des erhöhten Trägheitsmoments, dass ein unberechenbares Durchhängen wie bislang von Schläuchen bekannt nicht mehr zu befürchten ist.

Es wird vorgeschlagen, dass der kombinierte Injektionsstopfen außen am Zugang eine Rillenstruktur aufweist. Eine Rillenstruktur hat sich dafür bewährt, mit einem Thermoformverfahren zwischen die Folienlagen eingeschweißt zu werden.

Nach einem sechsten Aspekt der hier vorliegenden Erfindung löst die gestellte Aufgabe ein Beutel für medizinische Zwecke, leer oder befüllt mit einem Fluid, mit einem Beutelinneren zwischen zwei Folienlagen sowie mit einem körperhaft ausgebildeten Zugang zum Beutelinneren und mit einem Injektionsstopfen, wobei der Zugang mit dem Injektionsstopfen einstückig ausgebildet ist, wobei der Beutel einen Injektionsstopfen wie vorstehend beschrieben aufweist.

Es versteht sich, dass sich die vorstehend genannten Vorteile auch unmittelbar auf den Beutel erstrecken, der mit einem kombinierten einstückigen Zugang-Stopfen-Element ausgestattet ist.

Auch versteht es sich, dass es insbesondere zum Befüllen des Beutels von Vorteil ist, wenn neben der einstückig ausgebildeten Zugangs-Injektionsstopfen-Struktur ein Schlauch zwischen die Folienlagen eingeschweißt ist und einen Entnahmestopfen aufweist. In dem Moment, wo der Entnahmestopfen vorhanden ist, sollte der Beutel bereits gefüllt sein, wenn er die Produktionsanlage gefüllt verlassen soll.

Die Erfindung wird nachstehend anhand von Ausführungsbeispielen unter Bezugnahme auf die Zeichnung näher erläutert. Dort zeigen
- Figur 1: schematisch in einer Draufsicht einen Kopfbereich eines Infusionsbeutels mit zwei Zugängen, wobei ein Injektionszugang mit einem Injektionsstopfen verschlossen ist, wie aus dem Stand der Technik bekannt ist,
- Figur 2: schematisch in einer Draufsicht ein Zugang-Injektionsstopfen-Element,
- Figur 3: in ähnlicher Ansicht wie Figur 2 eine zweite Ausführungsform eines solchen Elements,
- Figur 4: in gleicher Draufsicht wie die Figuren 2 und 3 eine dritte Ausführungsform eines solchen Elements,
- Figur 5: in einer schematischen Draufsicht ähnlich zu Figur 1 einen Kopf eines Injektionsbeutels mit eingesetztem Element aus Figur 2, sowie
- Figur 6: verschiedene Beutelformen und Ausführungen in schematischer Draufsicht, jeweils beispielhaft mit dem Element aus Figur 3.

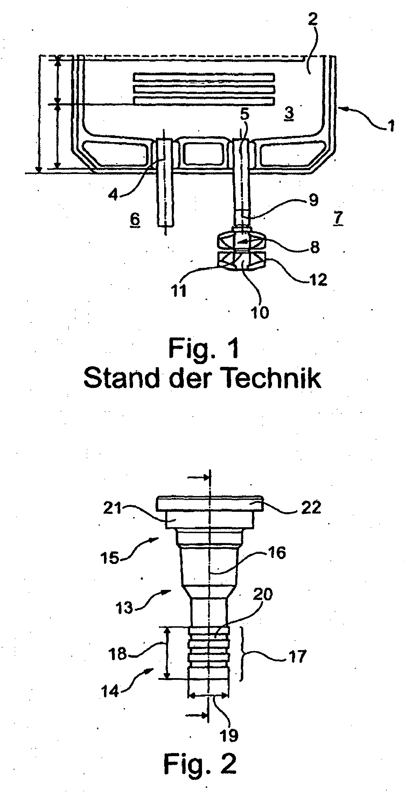

Der Infusionsbeutel 1 aus Figur 1 besteht im Wesentlichen aus einer oberen Folie 2 und einer unteren Folie (von der oberen Folie 2 verdeckt). Der Infusionsbeutel 1 ist bereits fertig hergestellt. Zu einem Innenraum 3 bestehen zwei Zugänge, nämlich ein erster Zugang 4 und ein zweiter Zugang 5, beide ausgebildet als gleich lange hohlzylindrische Kunststoffschläuche. Der erste Zugang 4 liegt auf einer Entnahmeseite 6 des Infusionsbeutels 1, der zweite Zugang 5 hingegen auf einer Injektionsseite 7 des Infusionsbeutels 1.

Das Kunststoffröhrchen des zweiten Zugangs 5 auf der Injektionsseite 7 ist mit einem Twist-Off Injektionsstopfen 8 verschlossen. Ein Stopfenteil 9 befindet sich in enger Klemmpassung im Kunststoffröhrchen des zweiten Zugangs 5. Der Stopfenteil 9 ist seinerseits in einem Kunststoffhohlzylinder 10 des Twist-Off-Injektionsstopfens 8 mit Hilfe eines Elastomers (nicht beziffert) ausgebildet. An seiner vom Infusionbeutel 1 abgewandten Seite abgedichteten Kunststoffhohlzylinder 10 ist eine Sollscherstelle 11 in Form einer ringsum laufenden Schwächung der Wandstärke des Kunststoffhohlzylinders 10 ausgebildet, sowie auf beiden Seiten der Sollscherstelle 11, also sowohl zum Infusionsbeutel 1 gewandt als auch von ihm weg gewandt jeweils eine Doppelflügelanordnung 12 (exemplarisch beziffert) vorgesehen.

Zum Befüllen des Infusionsbeutels 1 wird das offene Kunststoffröhrchen des ersten Zugangs 4 verwendet, welches anschließend mit einem Entnahmestopfen (noch nicht aufgesetzt) verschlossen wird.

Wird der Infusionsbeutel 1 bei einem medizinischen Einsatz angewendet, so wird er mit den beiden Zugängen an einem Kopfbereich des Beutels (in der Figur 1 dargestellt) nach unten gerichtet aufgehängt. Durch Drehen der jeweils zwei Doppelflügel in der Doppelflügelanordnung 12 gegeneinander, üblicherweise mit zwei Händen, wird der Verschluss des Kunststoffröhrchens am zweiten Zugang 5 geöffnet. Ein sogenannter Spike-Port wird in den Kunststoffhohlzylinder 10 des Twist-Off-Injektionsstopfens 8 eingeklemmt. Durch diesen wird die Flüssigkeit entnommen. Abgezogen werden kann der Spike-Port erst dann, wenn der Beutel leer ist oder nicht mehr weiter verwendet werden soll, weil der zweite Zugang 5 ansonsten nicht mehr dichtet.

Auf der Injektionsseite 7 des Infusionsbeutels 1 sind somit zwei Bauteile verwendet, die nacheinander bei der Herstellung eingesetzt werden: Zunächst das Kunststoffröhrchen im zweiten Zugang 5, welches mit dem Infusionsbeutel 1 verschweißt wird. Ist dies erfolgt, wird in einem nachgeschalteten Arbeitsgang der Twist-Off-Injektionsstopfen 8 in das Röhrchen an dessen vom Infusionsbeutel 1 abgewandten Seite eingeklemmt, so dass es dichtet.

Das einstückige, kombinierte Zugang-Stopfen-Element 13 in Figur 2 ist demgegenüber dazu ausgelegt, unmittelbar in die beiden Folienlagen eines medizinischen Beutels eingeschweißt zu werden.

Das Zugang-Stopfen-Element 13 besteht im Wesentlichen aus zwei unterschiedlichen funktionstragenden Teilen, nämlich einerseits einem Zugangsteil 14 und andererseits einem Injektionsstopfen Teil 15, welche sich in einer Fortsetzung beide entlang einer Längserstreckungsachse 16 erstrecken, welche im hier vorliegenden Beispiel außerdem eine Rotationssymmetrieachse ist. Der Zugangsteil 14 ist einheitlich aus einem Zugangs-Werkstoff hergestellt. Er ist hohl und verfügt über eine Wanddicke von beispielsweise etwas über 1,0 mm.

An einem Verschweißbereich 17 hat das Zugang-Stopfen-Element 13 eine auf ein Schweißwerkzeug abgestimmte Verschweißlänge 18 von beispielsweise etwa 12 mm und einen Außendurchmesser 19 von beispielsweise 8,7 mm.

Im Verschweißbereich 17 sind rotationssymmetrische Rillen 20 (exemplarisch beziffert) angeordnet.

Im Verlauf entlang der Längserstreckungsachse 16 weitet sich das Zugang-Stopfen-Element 13 auf, und zwar sowohl im Außendurchmesser als auch im Innendurchmesser. Hier dargestellt ist eine mehrstufige Aufweitung vorgesehen. Es kann jedoch auch auf eine Aufweitung verzichtet werden, oder es kann eine stufenlose oder einstufige Aufweitung erfolgen, oder es kann eine Verjüngung erfolgen.

An einem hohlen Kragen 21 des Zugangsteils 14 ist ein Elastomer-Dichtstopfen 22, somit aus einem anderen Werkstoff hergestellt, fest in den röhrenförmigen Zugangsteil 14 eingepasst. Die Passung ist komplett dichtend. Es kann beispielsweise eine Klemmpassung mit einer ausreichenden Dichtkraft verwendet worden sein, oder es kann beispielsweise ein Dichtkleber verwendet sein, oder es kann eine Labyrinthdichtung verwendet sein, oder beliebige andere Dichtungsweisen sind möglich.

Durch die Festverbindung des Elastomer-Dichtstopfens 22 in den röhrenförmigen Körper des Zugangsteils 14 kann von einem einstückigen, kombinierten Element aus Zugang und Stopfen gesprochen werden.

In der Produktion ist der Verschweißbereich 17 am Zugangsteil 14 dazu vorgesehen, mit seinem Außendurchmesser, welche die Rillen 20 trägt, zwischen die beiden Folienlagen eingeschweißt zu werden. Da das Zugang-Stopfen-Element 13 in Figur 2 nur an der Seite des Zugangsteils 14 offen ist, an der vom späteren Beutel abgewandten Seite hingegen mit dem Elastomer-Dichtstopfen 22 vollkommen verschlossen ist, entfällt eine von der vom Beutel weggewandten Seite in das Hohlelement hineinragende Mandrene technisch aus. Das Zugang-Stopfen-Element wird daher entweder in einem vorherigen Arbeitsgang vor dem letztendlichen Verschweißen mit einem kürzeren Schweißvorgang oder anderweitig angeheftet, oder es wird von außen zum Schweißen gehalten. Nur der Vollständigkeit halber sei erwähnt, dass selbstverständlich auch auf der vom Beutel abgewandten Seite des jetzt dargestellten Elastomer-Dichtstopfens eine weitere Halterungsmöglichkeit vorgesehen sein kann, beispielsweise direkt durch eine Fortsetzung des Elastomer-Dichtstopfens, wobei dann darauf zu achten ist, dass die Gesamtlänge des kumulierten Zugang-Stopfen-Elements 13 noch für die vorgesehene Injektionsnadellänge abgestimmt ist.

Ist in der Produktionsanlage eine dichte Verschweißung des Verschweißbereichs 17 mit den Kunststofflagen des Infusionsbeutels erfolgt, ist dieser an seinem Zugang automatisch dicht.

Für eine spätere Injektion von Wirkstoffen kann eine Injektionsnadel durch den Elastomer-Dichtstopfen 22 hindurch idealerweise etwa fast bis an das Ende des Zugangsteils 14 zum Beutel hin eingestochen werden. Wird auf diese Weise ein Wirkstoff injiziert, verteilt dieser sich gut im Innenbereich des Beutels, aber die Spritze ist noch im röhrenförmigen, stabilen Zugangsteil 14 des Zugang-Stopfen-Elements 13 befindlich, so dass sie nicht den Beutel an dessen dünner Kunststofffolie von innen beschädigen kann.

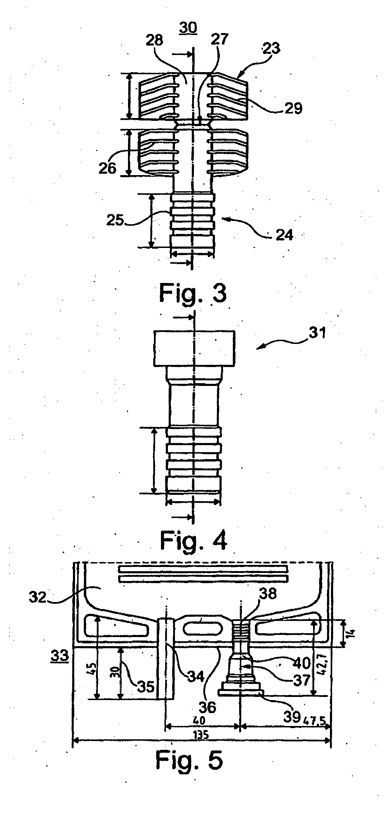

Die zweite Ausführungsform 23 eines kombinierten einstückigen Zugang-Stopfen-Elements 13 in Figur 3 ist in sogenannter Twist-Off-Bauweise hergestellt. Die zweite Ausführungsform 23 ist in gleicher Weise aus einem sich über den bei weitem größten Teil des kombinierten Elements erstreckenden Zugangsteil 24 gebildet. Der Zugangsteil beginnt beutelseitig mit einem Verschweißbereich 25 in gleicher Ausführung wie die erste Ausführungsform in Figur 2, führt dann weiter röhrenförmig, diesmal ohne Aufweitung, sogar mit einer Verjüngung des Außendurchmessers, bis zu zwei Halteflügeln 26 (exemplarisch beziffert) und zu einer durch Reduzierung der Wandstärke erzeugten Sollscherstelle 27. Im selben Werkstoff und somit sogar im engeren Sinne einstückig ausgebildet setzt sich die zweite Ausführungsform 23 über die Sollscherstelle 27 hinweg fort in einen Stopfenteil 28, welcher über ein Paar Drehflügel 29 (exemplarisch beziffert) verfügt. An seiner vom späteren Beutel abgewandten Seite 30 ist die kunststoffröhrenförmige Struktur der zweiten Ausführungsform 23 geschlossen ausgebildet.

In der Praxis wird wiederum der Zugangsteil 24 mit seinem Verschweißbereich 25 zwischen die Kunststofflagen eingeschweißt, so dass dort sichere Dichtigkeit herrscht.

Der Injektionsbeutel ist dann dicht.

Zum medizinischen Einsatz wird der Stopfenteil 28 durch Festhalten der Halteflügel 26 und gleichzeitiges Drehen der Drehflügel 29 um die Längserstreckungsachse herum abgeschert, so dass die zweite Ausführungsform mit ihrem röhrenförmigen Körper an beiden Seiten geöffnet ist, somit eine Verbindung zwischen dem Beutelinneren an der Zugangsseite und der Außenseite an der Sollscherstelle 27 besteht. Dort kann ein Injektionsmittelport eingepresst werden.

Die dritte Ausführungsform 31 eines kombinierten einstückigen Zugang-Stopfen-Elements in Figur 4 entspricht vom Konstruktionsprinzip dem ersten Ausführungsbeispiel aus Figur 2, lediglich mit anderen Geometrien. Die dritte Ausführungsform 31 sei daher als illustrativ dahingehend weisend verstanden, dass zahlreiche Geometrien zur Anwendung kommen können, wobei das technische Grundprinzip zwischen der ersten Ausführungsform und der dritten Ausführungsform 31 identisch ist.

Der letztlich zu befüllen bereite Beutel 32 in Figur 5 verfügt an seiner Entnahmeseite 33 über ein eingeschweißtes Kunststoffröhrchen 34, welches beispielsweise insgesamt eine Länge von über 40 mm hat, wovon aber beispielsweise nur 30 mm einen Überstand 35 über eine Beutelkante 36 hinaus bilden.

Mit idealerweise gleichem Überstand ist auf der Injektionsseite des Beutels 32 hingegen ein einstückiges, kombiniertes Zugang-Stopfen-Element 37 unmittelbar mit seinem Verschweißteil 38 zwischen die Folienlagen des Beutels 32 eingeschweißt. Das dichtende Elastomer 39 ist fest eingepasst und im Idealfall nicht zerstörungsfrei aus dem Zugangsteil 40 des Zugang-Stopfen-Elements 37 entfernbar.

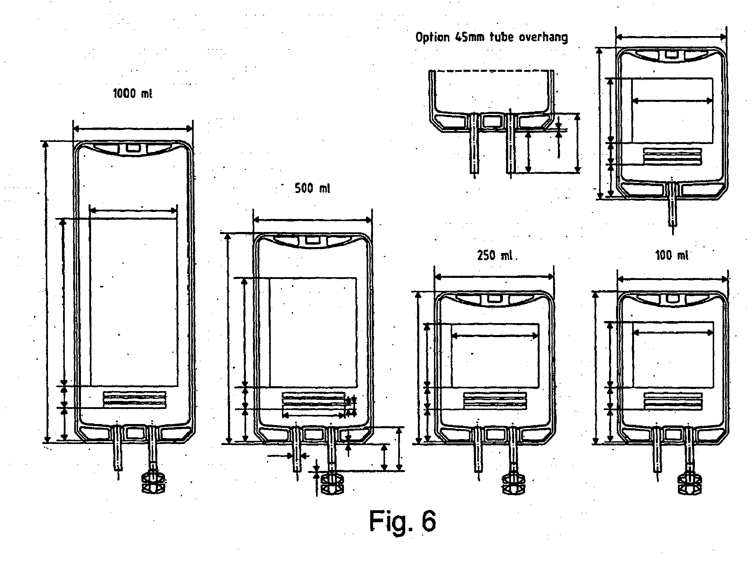

Es versteht sich, dass verschiedenste Ausführungen eines kombinierten Zugang-Stopfen-Elements mit verschiedensten Beutelformen und verschiedensten Anzahlen von Zugängen verbaut werden können, ohne von der Grundidee der Erfindung abzuweichen. Eine kleine Auswahl verschiedener Formen ist in Figur 6 gezeigt, reichend von einem 100 ml fassenden Beutel bis hin zu einem 1.000 ml fassenden Beutel, wobei für die Praxis beide Grenzen nicht als begrenzend aufzufassen seien.

Außerdem ist im oberen Bereich der Figuren gezeigt, dass der Überstand auch größer sein kann, beispielsweise 45 mm, wobei dazu erwähnt sein mag, dass auch eine kürzere Überstandslänge denkbar ist.

Im Übrigen sei erwähnt, dass es von besonderem Vorteil ist, wenn ein kombiniertes Zugang-Stopfen-Element im Spritzgussverfahren hergestellt wird. Dies ist gegenüber der bisher aus dem Stand der Technik bekannten Schlauchextrusion unter sterilen Bedingungen deutlich kostengünstiger.

Bei einer Anlage, welche dazu eingerichtet ist, mit ihrem Werkzeug mehrere Zugänge zu einem Beutel herzustellen, ist außerdem bevorzugt eine Wahlmöglichkeit für die Anlage dahingehend gegeben, dass der Bediener der Anlage eine beliebige Anzahl der Zugänge mit herkömmlichen, offenen Röhrchen ausstattet. So kann bei einer Anlage zum Herstellen von Beuteln mit zwei Zugängen entschieden werden, ob beide Zugänge mit herkömmlichen, offenen Röhrchen für eine schnellere Befüllbarkeit ausgestattet werden sollen; oder ob eines der beiden offenen Zugangsröhrchen durch ein kombiniertes Zugang-Stopfen-Element ersetzt werden soll, welches aber geschlossen ist, so dass dieser Zugang zum Befüllen des Beutels ausfällt und das Befüllen daher mehr Zeit in Anspruch nimmt. Es wird von der Beutelgröße und den übrigen Anlagenstationen abhängen, ob dadurch ein zeitlicher Flaschenhals erzeugt wird, der den Maschinentakt spürbar verlangsamt.

## Patentansprüche

1. Injektionsstopfen für einen Beutel für medizinische Zwecke, wobei der Injektionsstopfen einen ausgeformten Zugang mit einer Innenseite aus einem ersten Werkstoff aufweist und wobei der Injektionsstopfen eine Elastomerdichtung aus einem zweiten Werkstoff aufweist,
***dadurch gekennzeichnet, dass***
zugangsseitig der Elastomerdichtung eine Dichtmembran vorgesehen ist, welche zum Zugang gewandt den ersten Werkstoff aufweist.
[ursprünglicher Patentanspruch 12]

2. Injektionsstopfen für einen Beutel für medizinische Zwecke,
insbesondere Injektionsstopfen nach Anspruch 1,
***dadurch gekennzeichnet*, *dass***
der Injektionsstopfen einen einstückig ausgeformten Zugang aufweist.
[ursprünglicher Patentanspruch 8]

3. Injektionsstopfen nach Anspruch 1 oder 2, ***dadurch gekennzeichnet*, *dass*** der Zugang des Injektionsstopfens hohlzylindrisch ausgebildet ist.
[ursprünglicher Patentanspruch 9]

4. Injektionsstopfen nach einem der vorstehenden Ansprüche, ***dadurch gekennzeichnet, dass*** im Bereich des Zugangs ein Schlauchstück mit einem Außendurchmesser von 8,0 mm bis 9,1 mm vorgesehen ist, insbesondere von etwa 8,0 mm, 8,7 mm oder 8,8 mm.
[ursprünglicher Anspruch 10]

5. Injektionsstopfen nach einem der vorstehenden Ansprüche, ***dadurch gekennzeichnet, dass*** der Injektionsstopfen einschließlich des Zugangs entlang einer Längsachse des Zugangs eine Länge von mehr als 30 mm, insbesondere mehr als 35 mm oder bevorzugt mehr als 40 mm aufweist.
[ursprünglicher Anspruch 11]

6. Injektionsstopfen,
insbesondere nach einem der vorstehenden Ansprüche,
für einen Beutel für medizinische Zwecke, wobei der Injektionsstopfen einen ausgeformten Zugang mit hohlzylindrischer Form aufweist,
***dadurch gekennzeichnet*, *dass***
der Zugang eine Wanddicke von mehr als 1,0 mm aufweist.
[ursprünglicher Anspruch 13]

7. Injektionsstopfen nach einem der vorstehenden Ansprüche, ***dadurch gekennzeichnet, dass*** der Injektionsstopfen außen am Zugang eine Rillenstruktur aufweist.
[ursprünglicher Anspruch 14]

8. Beutel für medizinische Zwecke, leer oder befüllt mit einem Fluid, mit einem Beutelinneren zwischen zwei Folienlagen sowie mit einem körperhaft ausgebildeten Zugang zum Beutelinneren und mit einem Injektionsstopfen, ***dadurch gekennzeichnet*, *dass*** der Zugang mit dem Injektionsstopfen einstückig ausgebildet ist, wobei der Beutel einen Injektionsstopfen nach einem der vorstehenden Ansprüche aufweist.
[ursprünglicher Anspruch 15]

9. Beutel nach Anspruch 8, ***dadurch gekennzeichnet, dass*** neben der einstückig ausgebildeten Zugangs-Injektionsstopfen-Struktur ein Schlauch zwischen die Folienlagen eingeschweißt ist und einen Entnahmestopfen aufweist.
[ursprünglicher Anspruch 16]
